# EUROPÄISCHE PATENTSCHRIFT

(11) **EP 1 267 467 B1**
(45) Veröffentlichungstag und Bekanntmachung des Hinweises auf die Patenterteilung: **21.03.2012**
(21) Anmeldenummer: 02012819.5
(22) Anmeldetag: 10.06.2002
(51) Int. Cl.: H02H 3/33

(54) **Vorrichtung zum Erfassen von elektrischen Differenzströmen**
Device for the detection of differential currents
Dispositif pour la détection des courants différentiels

(30) Priorität: 12.06.2001 DE 10128311; 05.04.2002 DE 10215019
(43) Veröffentlichungstag der Anmeldung: 18.12.2002
(73) Patentinhaber: Doepke Schaltgeräte GmbH, 26506 Norden (DE)
(72) Erfinder: Joesten, Ingo, Dipl.-Ing., 26736 Pewsum (DE); Grünebast, Günter, Dipl.-Ing., 26506 Norden (DE); Schmidt, Manfred, Dipl.-Ing., 26524 Berumbur (DE)
(74) Vertreter: Jabbusch, Matthias

(56) Entgegenhaltungen:
- DE-A1- 3 531 023
- DE-A1- 3 543 985

## Beschreibung

Die Erfindung betrifft eine Vorrichtung zum Erfassen von elektrischen Differenzströmen, insbesondere von Mischströmen aus glattem Gleichstrom und Wechselströmen, umfassend wenigstens zwei Leiter für zu überwachende Lastströme und umfassend zumindestens einen magnetischen Stromwandler, durch den die Leiter geführt sind.

Vorrichtungen zum Erfassen von Differenzströmen mit einem Frequenzspektrum bis hinab zu 0 Hz sind insbesondere als allstromsensitive Differenzstrom-Schutzeinrichtungen ausgebildet, welche die Differenz zwischen in eine elektrische Anlage fließenden Ströme ermitteln.

Differenzstrom-Schutzeinrichtungen werden zum Beispiel zum Schutz elektrischer Anlagen eingesetzt, indem sie die vektorielle Summe der in die Anlage hineinfließenden Ströme, den Differenzstrom, erfassen und, falls dieser einen Grenzwert überschreitet, eine Trennung der Anlage vom Versorgungsnetz bewirken. Durch Frequenzumrichter können in elektrischen Anlagen durch Abfluss zur Erde Differenzströme im Frequenzbereich von 0 Hz bis über 20 kHz entstehen, die nur von allstromsensitiven Differenzstrom-Schutzeinrichtungen erfaßt werden können.

Bei der breitbandigen Erfassung von Strömen mit Frequenzen bis hinab zu 0 Hz mit magnetischen Stromwandlern ist die Anwendung des direkten Induktionsprinzipes nicht möglich, da die für das Induktionsprinzip notwendige zeitliche Änderung des Stromes nicht gegeben ist. Um mit magnetischen Wandlern einen glatten Gleichstrom erfassen zu können, werden regelmäßig Verfahren angewendet, bei denen der durch den zu erfassenden Strom I_{Δ} im Wandlerkern hervorgerufene Magnetisierungszustand durch Überlagerung mit einem sich ändernden Magnetfeld in bestimmten Zeitabständen oder auch fortlaufend ermittelt wird.

So ist zum Beispiel ein Verfahren üblich, bei dem ein zeitlich veränderlicher, mit einer bestimmten Hilfsfrequenz periodisch verlaufender Trägerstrom Iₐ mit einer Trägerfrequenz fₐ über eine Hilfswicklung im Wandlerkern einen sich entsprechend verändernden magnetischen Fluß erzeugt, der in derselben oder auch einer weiteren Wicklung eine Trägerspannung Uₐ induziert. Der zu erfassende Strom I_{Δ} mit beliebigem zeitlichen Verlauf erzeugt im Wandlerkern gleichfalls eine magnetische Feldstärke, die sich der Feldstärke der Hilfsschwingung überlagert. Infolge dieser Modulation an der Krümmung der Magnetisierungskennlinie des Wandlerwerkstoffes erscheint der zeitliche Verlauf des Stromes I_{Δ} dann als Hüllkurve der Trägerspannung Uₐ. Diese läßt sich durch ein geeignetes Demodulationsverfahren wieder rekonstruieren.

Es sind weiterhin Verfahren bekannt, bei denen der Wandler in geeigneter Weise als frequenzbestimmendes, rückkoppelndes Bauelement in einer Multivibratorschaltung eine Trägerspannung Uₐ erzeugt. Wird der Wandler einer solchen Anordnung zusätzlich durch einen zu erfassenden Strom I_{Δ} magnetisiert, moduliert er das Pulsweitenverhältnis der Trägerspannung entsprechend seinem zeitlichen Verlauf.

Ein solches Verfahren und die entsprechende Vorrichtung zum Erfassen von elektrischen Differenzströmen sind aus DE 35 43 985 bekannt.

Diesen bekannten Verfahren ist gemeinsam, daß der zu erfassende Strom I_{Δ} über die gekrümmte Magnetisierungskennlinie, d. h. über die von der Feldstärke abhängige Permeabilität des Wandlers dessen Wechselstrominduktivität steuert (Prinzip der gesteuerten Induktivität) und so die Trägerspannung Uₐ moduliert (Modulation an einer nichtlinearen Kennlinie). Darüber hinaus ist diesen Verfahren gemeinsam, daß die Modulation der Trägerspannung Uₐ und des Stromes I_{Δ} im Wandler erfolgt und somit der magnetische Stromwandler der Modulator ist.

Der Stromwandler, welcher nach obigem Modulationsprinzip mit einem Trägersignal oder Abtastsignal der endlichen Frequenz fₐ beaufschlagt bzw. durchflutet wird, erfaßt somit ungefiltert das Stromfrequenzspektrum des zu messenden elektrischen Stromes I_{Δ}.

Prinzipbedingt ist eine obere Frequenzbandbegrenzung des Differenzstromspektrums auf einfache Weise nicht möglich.

Eine Modulation stellt immer eine Abtastung eines Signals mit Hilfe eines höherfrequenten Abtastsignals dar. Daher gilt nach dem Abtasttheorem von Shannon, daß die Abtast- bzw. Trägerfrequenz fₐ zumindestens doppelt so groß sein muß, wie die größtmögliche zu erwartende Nutz- bzw. Meßfrequenz f_{m max} eines Meßsignals. Somit darf zur verzerrungsfreien und signalgetreuen Reproduktion des Meßsignals bei den oben genannten Meßverfahren bedingt durch eine endliche Abtast- bzw. Trägerfrequenz nur ein im Frequenzbereich begrenztes Frequenzstromspektrum, insbesondere Differenz- oder Fehlerstromspektrum, erfaßt werden.

Wird bei einer Abtastung die Bedingung fₘ < ½ fₐ nicht eingehalten, so entstehen Spektralanteile mit der Spiegelfrequenz fₛₚ = fₐ - fₘ in das Nutzband hinein. Ist im eigentlichen Nutzband ein Signal fₘ mit derselben Frequenz wie die Spiegelfrequenz fₛₚ vorhanden, kommt es auf nachteilige Weise zu Veränderungen des Signals fₘ.

Im Stand der Technik ist vorgeschlagen worden, in der Signalbearbeitungsfolge vor der Modulation oder Abtastung das Frequenzspektrum des Meßsignals mit Hilfe von steilflankigen Tiefpaßfiltern höherer Ordnung auf eine Frequenz f_{m max} < ½ fₐ zu begrenzen. Dadurch soll verhindert werden, daß Spektralanteile oberhalb von ½ fₐ den Modulator durchlaufen.

Wie weiter oben bereits angeführt, ist jedoch prinzipbedingt eine obere Begrenzung des Frequenzspektrums eines Differenzstromes nicht möglich. Da der zu erfassende Differenzstrom I_{Δ} somit unmittelbar auf den Modulator in Form des Wandlers einwirkt, entstehen in ihm die oben angegebenen Spiegelfrequenzen fₛₚ, die aus dem zu demodulisierenden Signal nicht mehr zu entfernen sind, so daß unter Umständen Differnzströme im zu erfassenden Frequenzbereich unterhalb von ½ fₐ aufgrund phasengleicher oder gegenphasiger Überlagerung überempfindlich oder stark abgeschwächt erfaßt werden. Die Folge wäre ein vorzeitiges Ansprechen z. B. einer mit der Vorrichtung in Wirkverbindung stehenden Schutzeinrichtung, wie ein Trenn-Relais, unterhalb der gewünschten Differenzstromschwelle oder im negativen Fall ein Ausbleiben eines erforderlichen Ansprechens der Schutzeinrichtung.

Der Erfindung liegt die Aufgabe zugrunde, eine Vorrichtung der eingangs geannten Gattung aufzuzeigen, mit ein Erfassen eines nach oben begrenzten Differenzstromspektrums frei von störenden Frequenzanteilen ermöglicht ist.

Diese Aufgabe wird durch die Merkmale des Anspruchs 1 gelöst. Erfindungsgemäßig ist vorgesehen , daß die Leiter durch wenigstens einen weiteren magnetischen Stromwandler geführt sind und daß der zweite Stromwandler mit dem ersten Stromwandler verschaltet ist, wobei auf dem Leitungsweg zwischen den Stromwandlern ein eine Phasendrehung des über den Leitungsweg geführten Stromes um etwa 180° beiwirkendes Koppelglied angeordnet ist, daß als Hochpaß ausgebildet ist.

Bei der erfindungsgemäßen Vorrichtung wird in dem zweiten Stromwandler das gleiche Differenzstromspektrum erfaßt wie in dem ersten Stromwandler. Aufgrund der Verschaltung beider Stromwandler und einer geeigneten Dimensionierung der Stromwandler wirkt der zweite Stromwandler als Stromquelle für den ersten Stromwandler und überträgt auf einem elektrischen Leitungsweg zunächst signalgetreu und unverzerrt das erfaßte Differenzstromspektrum auf den ersten Stromwandler. Der zweite Stromwandler weist eine wesentlich höhere Induktivität als der erste Stromwandler auf, so daß er als Stromquelle wirkt.

Während dieser Übertragung durchläuft das Differenzstromspektrum das im Leitungsweg zwischen beiden Wandlern angeordnete Koppelglied. Das Koppelglied ist derart ausgebildet, daß eine Phasendrehung des über den Leitungsweg geführten Stromes und somit eine Phasendrehung des erfaßten Differenzstromspektrums erfolgt. Nach Passieren des Koppelgliedes wird das somit phasengedrehte Differenzstromspektrum des zweiten Stromwandlers auf den ersten Stromwandler gegengekoppelt.

Durch die Ausbildung des Koppelgliedes als Hochpaß ist dabei gewährleistet, daß nur Differenzstromspektralanteile oberhalb einer bestimmten unteren Grenzfrequenz f_{gu} auf den ersten Stromwandler gegengekoppelt werden. Die Differenzstromspektralanteile im relevanten Meßbereich unterhalb dieser Grenzfrequenz f_{gu} werden vom ersten Stromwandler unverändert erfaßt, so daß vorteilhaft keine Verzerrung des Meßergebnisses eintritt.

Durch diese Gegenkopplung im Frequenzbereich oberhalb der Frequenz f_{gu} wird in Echtzeit vorteilhaft eine Auslöschung von störenden Differenzstormspektralanteilen erreicht. Diese Spektralanteile stehen sich mit gleicher Amplitude, aber um 180° versetzter Phase, gegenüber, so daß eine Reduzierung der Amplitude gegen 0 erfolgt.

Nach einer ersten Weiterbildung der Erfindung ist vorgesehen, daß der Hochpaß eine definierte untere Grenzfrequenz f_{gu} aufweist, die einen Auslösestromfrequenzverlauf gemäß dem Personenschutzgrenzwert nach IEC-Report 479 (Herzkammerflimmergrenze) ermöglicht. Durch den Einsatz der erfindungsgemäßen Vorrichtung kann eine Messung des elektrischen Stromes und eine sichere Auslösung einer Schutzeinrichtung unterhalb dieser Grenzfrequenz frei von dem Einfluß höherfrequenter Störspektralanteile erfolgen.

Die Träger- bzw. Abtastfrequenz fₐ der Wandler kann wesentlich größer als die untere Grenzfrequenz f_{gu} des Hochpaß sein. In diesem Fall reicht bereits eine Filterfunktion erster Ordnung aus, um sicherzustellen, daß bei den noch entstehenden Differenzfrequenzen die Amplitude so gering ist, daß eine Beeinflussung des eigentlichen Meßspektrums vernachlässigt werden kann.

Im einfachsten Fall besteht das als Hochpaß ausgebildete Koppelglied aus einem Draht mit jeweils einer gleichsinnigen Windung um den ersten und um den zweiten Stromwandler, wobei der Draht einen bestimmten Widerstand aufweist und mit den Induktivitäten der beiden Stromwandler ein Hochpaß-Filter erster Ordnung bildet. Der Drahtwiderstand wird dabei vorzugsweise so gewählt, daß eine untere Grenzfrequenz f_{gu} erreicht ist, um die Vorgaben im IEC-Report 479 zum Personenschutz zu erfüllen.

Zusätzlich kann durch Reihenschaltung einer Induktivität (z. B. ein einfacher Ferritkern) zum Drahtwiderstand ein Tiefpaß-Filter z. B. erster Ordnung mit einer zweiten höheren Grenzfrequenz f_{go} gebildet werden. Die Frequenz f_{go} wird so gewählt, daß im gesamten von der erfindungsgemäßen Vorrichtung auswertbaren Differenzstromspektrum eine maximale Auslöseschwelle zur Gewährleistung eines Brandschutzes nicht überschritten wird.

Die erfindungsgemäße Vorrichtung ist mit passiven Bauelementen ausbildbar, sie kann jedoch auch mit Hilfe einer aktiven Verstärkerschaltung realisiert sein.

Ein Ausführungsbeispiel der Erfindung, aus dem sich weitere erfinderische Merkmale ergeben, ist in der Zeichnung dargestellt. Es zeigen:
- Fig. 1:: eine Schaltanordnung einer erfindungsgemäßen Vorrichtung zum Erfassen eines elektrischen Differenzstromes;
- Fig. 2:: ein elektrisches Ersatzschaltbild der Vorrichtung gemäß Figur 1 und
- Fig. 3:: ein Diagramm mit der Darstellung des Auslösestromfrequenzganges der Vorrichtung gemäß Figuren 1 und 2.

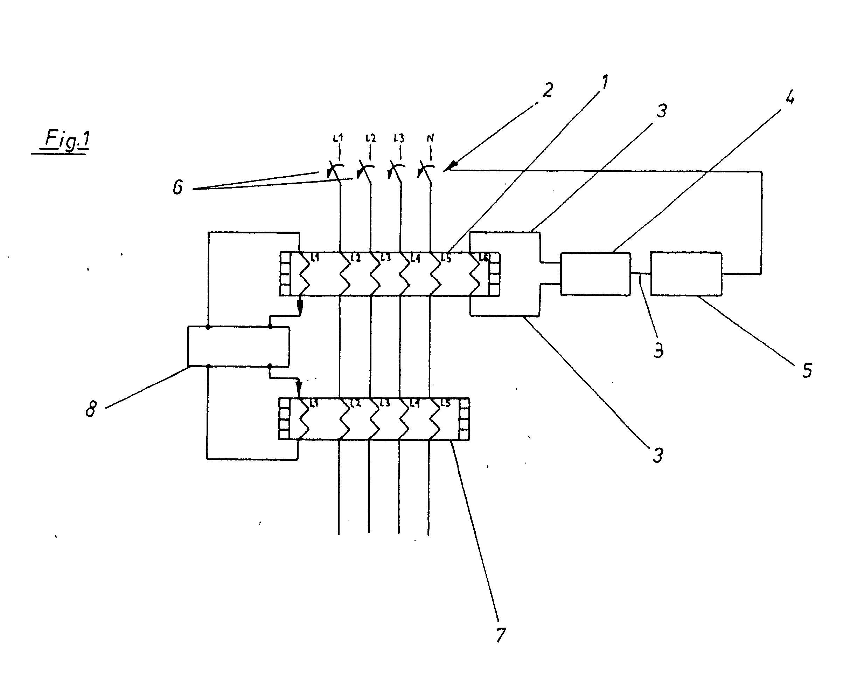

Die Vorrichtung in Fig. 1 weist einen ersten magnetischen Stromwandler 1 auf. Durch diesen Wandler 1 ist ein elektrischer Leiterstrang 2 mit den Leitern L1, L2, L3 und N geführt.

Mit dem ersten Wandler 1 steht über Leitungen 3 eine Auswerteeinheit 4 in Verbindung, die über eine Leitung 3 noch mit einer Auslöseeinheit 5 verbunden ist. Die Auslöseeinheit 5 wirkt mechanisch auf ein in die Leiter L1, L2, L3, N eingesetztes Schaltwerk 6 zurück, so daß bei Auftreten eines bestimmten Differenzstromes eine Unterbrechung des über den Leiterstrang 2 geführten Leitungsweges erfolgt. Die erfindungsgemäße Vorrichtung ist somit als Differenzstromschutzvorrichtung ausgebildet.

Dem ersten Stromwandler 1 ist ein zweiter Stromwandler 7 nachgeschaltet. Der elektrische Leiterstrang 2 ist mit seinen Leitern im Anschluß an den ersten Wandler 1 durch den zweiten Wandler 7 geführt. Dem Wandler 7 kann im weiteren Verlauf des elektrischen Leitungsweges z. B. ein Frequenzumrichter nachgeschaltet sein.

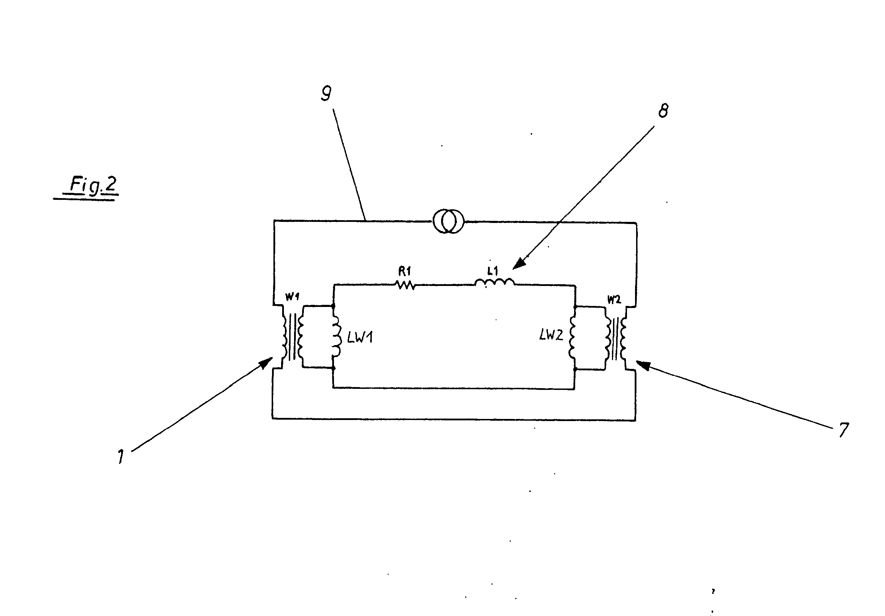

Der zweite Wandler 7 ist über ein Koppelglied 8 mit dem ersten Wandler 1 verschaltet. Das Koppelglied 8 ist, wie in Fig. 2 erkennbar, aus einem Widerstand R1 und den Induktivitäten LW 1 und LW 2 der Wandler 1 (W1) und 7 (W2) als Hochpaß erster Ordnung ausgebildet. Das Ersatzschaltbild zeigt eine einfache passive Ausgestaltung der erfindungsgemäßen Vorrichtung, die mit einem Primärdifferenzstrompfad 9 beaufschlagt ist.

Zu dem Widerstand R1 ist noch eine Induktivität L1 in Reihe geschaltet, so daß durch das Koppelglied 8 zugleich ein einfacher Tiefpaß ausgebildet ist.

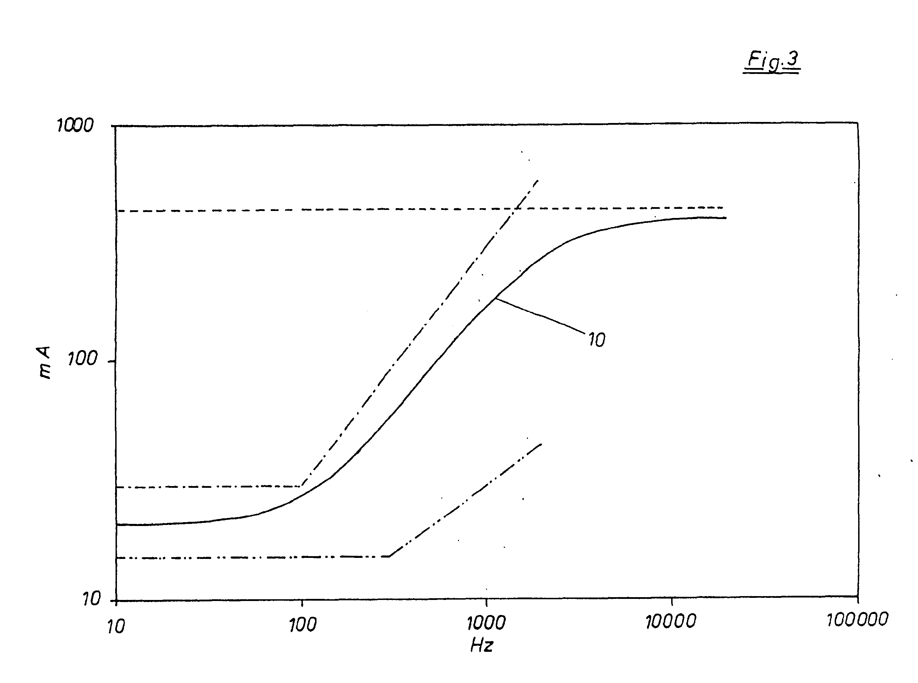

Fig. 3 zeigt den Verlauf der mit durchgehender Linie 10 kenntlich gemachten Auslöseschwelle für die Vorrichtung gemäß Figuren 1 und 2 über die Frequenz. Bei niedrigen Frequenzen bis 100 Hz ist die Auslösestromstärke kleiner als 30 mA. Bei einem Frequenzanstieg auf 1.000 Hz und größer, steigt die Auslösestromstärke auf über 100 mA.

Mit strich-punktierten Linien sind in der Fig. 3 minimale und maximale Schwellenwerte nach dem Report IEC 479 kenntlich gemacht. Der Verlauf der Auslösestromstärke befindet sich vorteilhaft in einem Bereich zwischen noch zulässigen minimalen und maximalen Werten. Eine gestrichelte Linie bei etwa 400 mA zeigt eine oberste Auslösestromstärke aus Brandschutzgründen. An diese Grenze nähert sich die Linie 10 bei hohen Frequenzen von 10.000 Hz und darüber an, ohne sie zu erreichen.

Weitere Ausführungsbeispiele der Erfindung werden anhand nachstehend aufgeführter Figuren erläutert. Es zeigen:

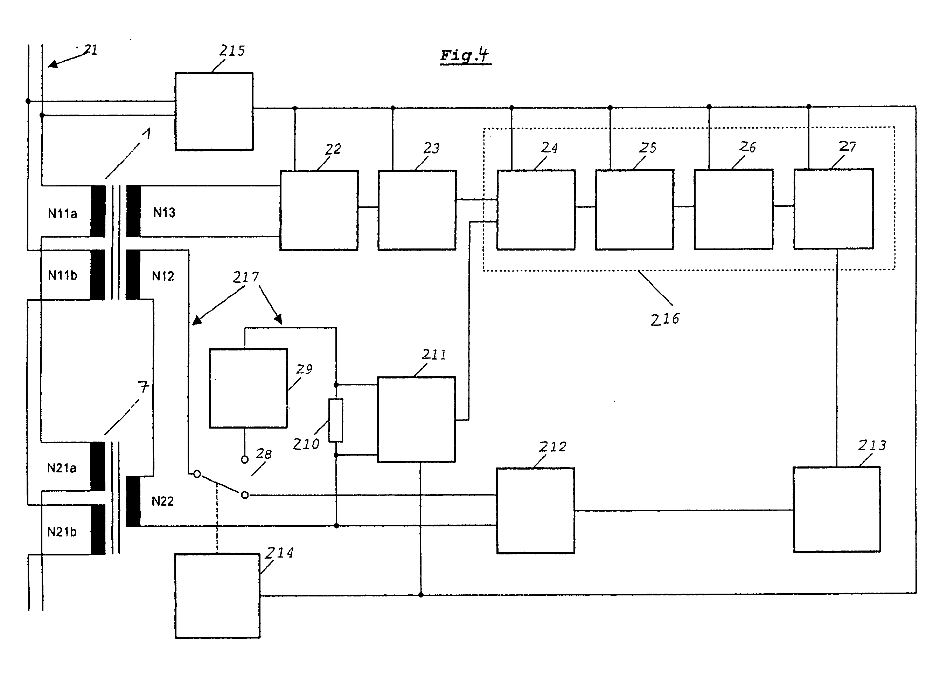

- Fig. 4:: ein Blockschaltbild einer erfindungsgemäßen Vorrichtung zum Erfassen von elektrischen Differenzströmen und

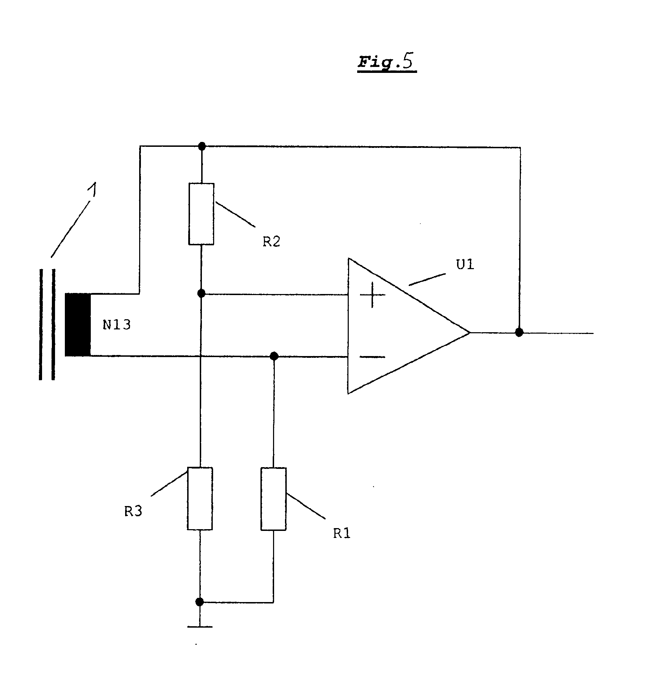

- Fig. 5:: ein Schaltbild einer Schaltung 2 in Fig. 4, die zusammen mit der Wicklung N13 des Wandlers 1 eine modulierende Schwingschaltung bildet.

Zur Erkennung von glatten Gleichfehlerströmen sowie Wechselfehlerströmen verschiedener Form, welche nach dem Induktionsprinzip nicht erfaßt werden können, wird eine Erfassung nach dem Prinzip der gesteuerten Induktivität im Wandler 1 vorgenommen. Um sicherzustellen, daß hierbei die Shannon'sche Abtastbedingung nicht durch Differenzstromanteile zu hoher Frequenzen verletzt wird, werden diese Stromanteile von dem zweiten Stromwandler 7 auf die Wicklung N12 des ersten Stromwandlers 1 gegengekoppelt, so daß sie magnetisch nur noch stark gedämpft im Kern des Stromwandlers 1 wirksam werden. Die Wicklungen N12 und N22 haben zu diesem Zweck vorzugsweise gleiche Windungszahlen und der Stromwandler 7 hat einen Kern mit einem wesentlich größeren Induktivitätsfaktor als der Kern des Stromwandlers 1. Hierdurch wirkt der Stromwandler 7 über seine Wicklung N22 auf die Wicklung N12 als Stromquelle, so daß der Vormagnetisierungsstrom nicht vom Stromwandler 1 auf den Stromwandler 7 übertragen wird. Ein Koppelglied 29 im Gegenkopplungsstromkreis bestimmt dabei allein oder zusammen mit den Induktivitäten der Wicklungen N12 und N22 die Amplituden / Frequenz - Charakteristik des gegengekoppelten Stromes.

Stromanteile mit Frequenzen f > f_{g} < 1/2*f_{T}, die eine fehlerfreie Modulation des Trägersignals f_{T} mit den niedrigen Differenzstromfrequenzen f > f_{g} im Stromwandler 1 stören, werden somit aus dem Differenzstromspektrum vorteilhaft entfernt.

Die mit diesen Merkmalen bekannte RCD wird nun bei dem Ausführungsbeispiel in Fig. 4 dahingehend weiter verbessert, daß der Erfassungsfrequenzbereich des Differenzstromes bis zu sehr hohen Frequenzen, d.h. bis in den MHz-Bereich, erweitert wird. Dazu ist ein in den Gegenkopplungsstromkreis 217 geschalteter niederohmiger Strommeßwiderstand 210 mit der Auswerteeinrichtung 216 verknüpft. An dem Strommeßwiderstand 210 ist eine dem Gegenkopplungsstrom proportionale Spannung abgreifbar und auf einem zweiten Erfassungsweg der Auswerteeinrichtung 216 direkt oder über weitere Signalbearbeitungseinheiten zuführbar.

Da der Gegenkopplungsstrom die oberen Frequenzanteile des Differenzstromes mit dem Amplituden / Frequenz - Verlauf enthält, die im Wandler 1 aufgrund der Gegenkopplung ausgelöscht wurden, lassen sich die in beiden Signalwegen übertragenen Frequenzspektren nach einer Verstärkungsanpassung in idealer Weise wieder vollständig zu dem ursprünglichen Gesamtfrequenzspektrum des Differenzstromes addieren, was einem glatten Frequenzgang des Ansprechstromes der RCD entspricht.

Weiterhin ist vorgesehen, daß der Stromwandler 1 in erfinderischer Weise mit nur einer Sekundärwicklung Bestandteil einer modulierenden Schwingschaltung ist, wodurch eine einfache Wechsel-Vormagnetisierung des Stromwandlers 1 mit einem Wechselstrom einer hohen Trägerfrequenz f_{T} ermöglicht wird. Auf den Einsatz eines separaten Frequenzgenerators mit nachfolgenden Filterstufen kann vorteilhaft verzichtet werden.

Eine Weiterbildung der Erfindung sieht vor, daß die aus einer Schaltung 22 und der Wicklung N13 gebildete modulierende Schwingschaltung einfach und kostengünstig als Rechteckgenerator (Multivibrator) gestaltbar ist. Fig. 5 zeigt eine mögliche Gestaltung des Frequenzgenerators als Multivibrator mit einem Komparator oder Operationsverstärker U1. Hierbei ist die Induktivität der Wicklung N13 auf dem Kern des ersten Stromwandlers 1 zusammen mit den ohmschen Widerständen R1, R2 und R3 frequenzbestimmend.

Vorteilhaft kann zum Erreichen einer hohen Trägerfrequenz f_{T} der Kern des ersten Stromwandlers 1 aus einem verlustarmen nanokristallinen oder amorphen Werkstoff mit kleinem Induktivitätsfaktor bestehen.

Durch den die Wicklung N13 des Stromwandlers 1 durchfließenden Wechselstrom stellt sich in dessen Kern ein wechselmagnetisierender Zustand ein. Wird der Stromwandler 1 von keinem weiteren Strom durchflutet, so ist das Ausgangssignal des Rechteckgenerators ein Rechtecksignal mit einem Puls-Pausenverhältnis von 1:1. Wird der Kern des Stromwandlers 1 jedoch zusätzlich durch einen Differenzstrom, d.h. durch eine Differenz der Lastströme in den primären Wicklungen N11a und N11b magnetisiert, so beeinflußt dieser Differenzstrom den wechselmagnetischen Zustand, welcher dem Verlauf des Differenzstromes entsprechend eine augenblickliche Veränderung der Induktivität der Wicklung N13 zur Folge hat. Damit ändert sich die Zeitkonstante des frequenzbestimmenden Gliedes, bestehend aus der Induktivität der Wicklung N13 und dem Widerstand R1, und somit das Puls-Pausenverhältnis der Rechteckgeneratorschwingung. Die Schwingung des Rechteck generators dient somit als Trägerfrequenz und wird also vom Differenzstrom im Puls-Pausenverhältnis moduliert.

Bevorzugt ist vorgesehen, daß dem die Schaltung 22 bildenden Rechteckgenerator nachfolgend zur Demodulation zumindestens ein Tiefpassfilter 23 im Leitungsweg angeordnet ist. Um die Trägerfrequenz f_{T} ausreichend zu unterdrücken, ist das Tiefpassfilter 23 beispielsweise als aktives Filter höherer Ordnung mit einer großen Steilheit im Sperrbereich und einer Grenzfrequenz deutlich unterhalb der Trägerfrequenz f_{T} ausgebildet. Am Ausgang des Tiefpassfilters 23 wird somit nur das Abbild des Differenzstromes erhalten und der Auswertung zugeführt.

Nach einer Weiterbildung der Erfindung ist vorgesehen, daß dem auf dem Leitungsweg zwischen den Stromwandlern 1, 7 angeordnetem Strommeßwiderstand 210 eine Verzögerungsschaltung 211 zur Ansprechverzögerung der höherfrequenten Differenzstromspektralanteile nachgeordnet ist.

Bevorzugt weist die Auswerteeinrichtung 216 unter anderem zum Auswerten der Signale des unteren Frequenzspektrums aus dem Tiefpass 23 und der höher frequenten, vom Gegenkopplungsstrom abgeleiteten Signale einen Summierverstärker 24 mit nachfolgendem Zweiweggleichrichter 25 auf. Der Summierverstärker 24 ermöglicht, daß die bei der erfindungsgemäßen Vorrichtung auf zweifache Weise erfaßten Differenzstromspektren durch unterschiedliche Verstärkung verschiedenen Bemessungsdifferenzströmen zugeordnet werden können. Beispielsweise werden zur Realisierung eines Personenschutzes mit einem Bemessungsdifferenzstrom von 30 mA von dem ersten Stromwandler 1 nur Differenzstromspektralanteile von 0 bis etwa 100 Hz separiert, während aus dem aus der Stromgegenkopplung generierten Signal weitere Differenzstromspektralanteile bis in den MHz-Bereich erfaßt und zur Realisierung eines Brandschutzes einem Bemessungsdifferenzstrom von 300 mA zugeordnet werden.

Weiterhin ist vorgesehen, daß dem Zweiweggleichrichter 25 zumindestens eine Komparatorschaltung 27 als Bestandteil der Auswerteeinrichtung 216 nachgeordnet ist. Im Leitungsweg zwischen dem Summierverstärker 24 und der Komparatorschaltung 27 kann dabei ein Tiefpassfilter 26 angeordnet sein, mit dem eine Grenzfrequenz so eingestellt wird, daß der nachfolgende Komparator auch auf Amplituden von 50 Hz Pulsdifferenzstromsignalen innerhalb der in den einschlägigen Normen geforderten Grenzen anspricht.

Die Komparatorschaltung 27 weist vorzugsweise zwei nacheinander geschaltete Komparatoren auf, wobei dem zweiten Komparator ein Tiefpassfilter zugeordnet ist. Der zweite Komparator mit dem Tiefpassfilter dient dazu, daß die erfindungsgemäße Vorrichtung bei kurzen transienten Differenzströmen nicht anspricht. Weiterhin wird mit der Tiefpassschaltung eine Verzögerung erreicht, welche ein Ansprechen erst bei der maximal zulässigen Auslösezeit bewirkt. Dadurch erhöht sich die Störsicherheit der erfindungsgemäßen Vorrichtung. Bei Ausführungen der erfindungsgemäßen Vorrichtung für Bemessungsdifferenzströme > 30mA können somit Ansprechzeiten eingestellt werden, die der erfindungsgemäßen Vorrichtung eine Eigenschaft als zeitselektive Differenzstrom-Schutzeinrichtung geben. Schließlich kann die Komparatorschaltung 27 mit wenigstens einem Auslöserelais 213 verknüpft sein, das bei Vorlage eines Differenzstromes bewirkt, daß beispielsweise ein mechanischer Kontaktapparat den Leitungsweg des Laststromes unterbricht.

Nach einer nächsten Weiterbildung der Erfindung ist vorgesehen, daß das Auslöserelais 213 mit bestimmten Sekundärwicklungen N22, N12 der beiden Stromwandler 1, 7 verknüpfbar ist, wobei die Verknüpfung über einen Schaltkontakt 28 vorgenommen ist, welcher von zumindestens einem Unterspannungsdetektor 214 in schaltender Weise beaufschlagt ist. Die erfindungsgemäße Vorrichtung ist dadurch auch in einem Unterspannungsbereich hilfsspannungsunabhängig wie ein herkömmlicher FI-Schutzschalter zur Erfassung von Differenzströmen in einem eingeschränkten Frequenzbereich einsetzbar. Liegt die für die hilfsspannungsabhängigen Baugruppen der erfindungsgemäßen Vorrichtung erforderliche Netzspannung unterhalb eines definierten Wertes, so werden bestimmte Sekundärwicklungen N22, N12 der beiden Stromwandler 1, 7 direkt mit der Erregerspule des Auslöserelais verschaltet. Der Schaltkontakt 28 stellt die leitende Verbindung zwischen diesen Bauelementen her.

Vorzugsweise ist vorgesehen, daß im Leitungsweg zwischen Schaltkontakt 28 und Auslöserelais 213 eine elektrische Anpassschaltung 212 angeordnet ist. Liegt die Spannung unterhalb eines definierten Wertes, beispielsweise unterhalb von 50V, so verbindet der Schaltkontakt 28 die elektrisch in Reihe miteinander verschaltete Sekundärwicklung N22 des zweiten Stromwandlers 7 und einer zweiten Sekundärwicklung N12 des ersten Stromwandlers 1 mit dieser elektrischen Anpassschaltung 212. Diese bildet in Verbindung mit den Induktivitäten beider Stromwandler 1, 7 und dem Auslöserelais einen Reihen- und Parallelschwingkreis aus, welcher in bekannter Weise zur Erfassung von Wechsel- und Pulsdifferenzströmen einsetzbar ist. Liegt die Spannung oberhalb eines definierten Wertes, so schaltet der Schaltkontakt 28 und stellt eine leitende Verbindung zwischen der Wicklung N12 und dem in Reihe zum Koppelglied 29 angeordneten Strommeßwiderstand 210 her.

In einer besonderen Ausgestaltung der Erfindung ist vorgesehen, daß das Koppelglied 29 in einfachster Weise als ohmscher Widerstand ausgeführt ist, der zusammen mit den Induktivitäten der Wicklungen N12 und N22 für den Strom im Gegenkopplungskreis einen Hochpass erster Ordnung mit der Grenzfrequenz fg bildet. Da in diesem Fall an dem Widerstand 210 eine beträchtlich höhere Spannung abfällt als an einem niederohmigen Strommesswiderstand, wird die Signalverarbeitungen in den weiteren Stufen einfach und wenig störanfällig.

Nach einer besonderen konstruktiven Ausbildung ist vorgesehen, daß die primären Wicklungen der aktiven Leiter beider Stromwandler 1, 7 gemeinsame Wicklungen um beide Wandlerkerne sind, daß eine erste Sekundärwicklung N13 des ersten Stromwandlers 1 als separate Wicklung für die Schwingschaltung ausgebildet ist und daß die Sekundärwicklung N22 des zweiten Stromwandlers 7 und eine zweite Sekundärwicklung N12 des ersten Stromwandlers 1 eine gemeinsame Wicklung sind. Hierdurch ist die erforderliche Phasendrehung für eine gegenkoppelnde Wirkung des Stromes aus der Wicklung N22 des Stromwandlers 7 auf den Stromwandler 1 mit einfachen passiven Zweipolen als Koppelglied gegeben. Durch das Zusammenführen dieser Wicklungen ist eine kompakte Ausbildung der erfindungsgemäßen Vorrichtung möglich.

In einer besonders vorteilhaften konstruktiven Ausgestaltung ist vorgesehen, daß der Kern des ersten Stromwandlers 1 und der Kern des zweiten Stromwandlers 7 in einem als Schutztrog ausgebildeten Gehäuse angeordnet sind. Beide Kerne tragen somit insbesondere bei dem Unterspannungsfall zur Ausbildung einer größeren Induktivität bei, um eine hilfsspannungsunabhängige Auslösung bei Wechsel- und Pulsdifferenzströmen zu bewirken.

Das Blockschaltbild in Fig. 4 zeigt zwei elektrische Leiter 21, die als Primärwicklungen N11a und N11b und N21a und N22a zweier magnetischer Stromwandler 1 und 7 ausgeführt sind.

Der erste Stromwandler 1 weist zwei voneinander getrennte Sekundärwicklungen N13 und N12 auf. Die erste Sekundärwicklung N13 ist dabei zusammen mit der Schaltung 22 eine als Rechteckgenerator ausgebildete Schwingschaltung (Fig. 2). Der Rechteckgenerator ist mit dem Tiefpass 23 verschaltet, dem als Teil einer Auswerteeinrichtung 216 der Summierverstärker 24 mit nachfolgendem Zweiweggleichrichter 25 im Leitungsweg nachfolgt.

Die zweite Sekundärwicklung N12 des ersten Stromwandlers 1 sowie die Sekundärwicklung N22 des zweiten Stromwandlers 7 sind über ein Schaltelement 28 mit dem in Reihe angeordneten Koppelglied 29 und Strommeßwiderstand 210 verschaltet.

Der Strommeßwiderstand 210 ist über die Verzögerungsschaltung 211 gleichfalls mit dem Summierverstärker 24 verknüpft. Die in dem Summierverstärker 24 zusammengefaßten Signale werden über einen Zweiweggleichrichter 25 und dem nachfolgenden Tiefpass 26 der Komparatorschaltung 27 zugeführt. Diese Komparatorschaltung 27 ist mit dem Auslöserelais 213 verknüpft.

Der Schaltkontakt 28 im Stromkreis der Sekundärwicklungen N12 und N22 steht mit dem Unterspannungsdetektor 214 in seine Schaltung bewirkender Wechselwirkung. Das Blockschaltbild zeigt den Zustand bei Vorlage einer Unterspannung. In diesem Fall sind die Sekundärwicklungen N12 und N22 beider Stromwandler 1, 7 über die elektrische Anpassschaltung 212 direkt mit dem Auslöserelais 213 verknüpft.

Eine Netzteilschaltung 215, welche aus den elektrischen Leitern 21 gespeist wird, versorgt die hilfsspannungsabhängigen Baugruppen 22, 23, 24, 25, 26, 27, 211 und 214 mit einer erforderlichen Gleichspannung.

## Patentansprüche

1. Vorrichtung zum Erfassen von elektrischen Differenzströmen, insbesondere von Mischströmen aus glattem Gleichstrom und Wechselströmen, umfassend wenigstens zwei Leiter für zu überwachende Lastströme und umfassend zumindestens einen magnetischen Stromwandler, durch den die Leiter geführt sind, wobei
die Leiter (L1, L2, L3, N) durch wenigstens einen weiteren magnetischen Stromwandler (7) geführt sind und daß der zweite Stromwandler (7) mit dem ersten Stromwandler (1) elektrisch leitend verschaltet ist, **dadurch gekennzeichnet, dass** auf dem Leitungsweg zwischen den Stromwandlern (1, 7) ein eine Phasendrehung des über den Leitungsweg geführten Stromes um etwa 180° bewirkendes Koppelglied (8) angeordnet ist, das als Hochpaß ausgebildet ist.

2. Vorrichtung nach Anspruch 1, **dadurch gekennzeichnet, daß** der Hochpaß (8) eine definierte untere Grenzfrequenz f_{gu} aufweist, die einen Auslösestromfrequenzverlauf gemäß dem Persenschutzgrenzwert nach IEC-Report 479 (Herzkammerflimmergrenze) ermöglicht.

3. Vorrichtung nach einem der vorhergehenden Ansprüche, **dadurch gekennzeichnet, daß** der Hochpaß aus einem Draht mit jeweils wenigstens einer gleichsinnigen Windung um den ersten und zweiten Stromwandler (1, 7) ausgebildet ist.

4. Vorrichtung nach Anspruch 3, **dadurch gekennzeichnet, daß** im Verlauf des Drahtes eine Induktivität angeordnet ist, so daß ein Tiefpaßfilter mit einer oberen Grenzfrequenz f_{go} ausgebildet ist.

5. Vorrichtung nach einem der Ansprüche 1 bis 4, **dadurch gekennzeichnet, daß** der erste Stromwandler (1) eine Sekundärwicklung (N12) aufweist und daß der zweite Stromwandler (7) eine Sekundärwicklung (N22) aufweist, welche elektrisch in Reihe mit der ersten Sekundärwicklung (N12) zur Gegenkopplung höherfrequenter Differenzstromanteile auf den ersten Stromwandler (1) verschaltet ist, wobei der erste Stromwandler (1) mit einer Sekundärwicklung (N13) und eine mit einer Auswerteeinrichtung (216) verknüpfte Schaltung (22) Bestandteile einer modulierenden Schwingschaltung zur Detektierung niederfrequenter Differenzstromanteile sind und daß auf dem Leitungsweg (217) zwischen den Stromwandlern (1, 7) ein Strommeßwiderstand (210) angeordnet ist, der zur Detektierung höherfrequenter Differenzstromanteile mit der Auswerteeinrichtung (216) verknüpft ist.

6. Vorrichtung nach Anspruch 5, **dadurch gekennzeichnet, daß** die primären Wicklungen (N11a, N21a, N11b, N21b) aller aktiven Leiter beider Stromwandler (1, 7) gemeinsame Wicklungen um die Kerne beider Stromwandler (1, 7) sind und daß die Sekundärwicklung (N22) des zweiten Stromwandlers (7) und eine zweite Sekundärwicklung (N12) des ersten Stromwandlers (1) eine gemeinsame Wicklung um beide Wandlerkerne ist.

7. Vorrichtung nach Anspruch 5 oder 6, **dadurch gekennzeichnet, daß** die aus der Schaltung (22) und der Wicklung (N13) des Wandlers (1) gebildete Schwingschaltung als Rechteckgenerator (Multivibrator) ausgebildet ist.

8. Vorrichtung nach Anspruch 7, **dadurch gekennzeichnet, daß** der Schaltung (22) zumindestens ein Tiefpassfilter (23) zur Demodulation nachgeordnet ist.

9. Vorrichtung nach Anspruch 8, **dadurch gekennzeichnet, daß** das Tiefpassfilter (23) als aktives Tiefpassfilter mit einer Welligkeit im Durchlassbereich größer 0 dB und einer Filterordnung größer 1 ausgebildet ist.

10. Vorrichtung nach Anspruch 9, **dadurch gekennzeichnet, daß** dem Strommeßwiderstand (210) eine Ansprechverzögerungsschaltung (211) nachgeordnet ist.

11. Vorrichtung nach einem der vorhergehenden Ansprüche 5 bis 10, **dadurch gekennzeichnet, daß** die Auswerteeinrichtung (216) einen Summierverstärker (24) mit nachfolgendem Zweiweggleichrichter (25) umfaßt, wobei der Summierverstärker (24) verschiedene Auslöseschwellen für beide erfaßte Differenzstromanteile der Schaltung (22) und des Strommesswiderstandes (210) aufweist.

12. Vorrichtung nach Anspruch 11, **dadurch gekennzeichnet, daß** dem Zweiweggleichrichter (25) zumindestens eine Komparatorschaltung (27) nachgeordnet ist.

13. Vorrichtung nach Anspruch 12, **dadurch gekennzeichnet, daß** im Leitungsweg zwischen dem Zweiweggleichrichter (25) und der Komparatorschaltung (27) zumindestens ein Tiefpassfilter (26) angeordnet ist.

14. Vorrichtung nach Anspruch 12 oder 13, **dadurch gekennzeichnet, daß** die Komparatorschaltung (27) zwei nacheinander geschaltete Komparatoren aufweist, wobei dem zweiten Komparator ein Tiefpass zugeordnet ist.

15. Vorrichtung nach einem der Ansprüche 12 bis 14, **dadurch gekennzeichnet, daß** die Komparatorschaltung (27) mit wenigstens einem Auslöserelais (213) verknüpft ist.

16. Vorrichtung nach Anspruch 15, **dadurch gekennzeichnet, daß** das Auslöserelais (213) mit der Sekundärwicklung (N22) des zweiten Stromwandlers (7), welche mit einer Sekundärwicklung (N12) des ersten Stromwandlers (1) elektrisch in Reihe verschaltet ist, verknüpfbar ist, wobei die Verknüpfung über einen Schaltkontakt (28) vorgenommen ist, welcher von zumindestens einem Unterspannungsdetektor (214) in schaltender Weise beaufschlagt ist.

17. Vorrichtung nach Anspruch 16, **dadurch gekennzeichnet, daß** im Leitungsweg zwischen Schaltkontakt (28) und Auslöserelais (213) eine passive elektrische Anpaßschaltung (212) angeordnet ist.

18. Vorrichtung nach Anspruch 17, **dadurch gekennzeichnet, daß** die elektrische Anpaßschaltung (212) in Verbindung mit der Sekundärwicklung (N22) des zweiten Stromwandlers (7) und der dazu elektrisch in Reihe verschalteten zweiten Sekundärwicklung (N12) des ersten Stromwandlers (1) und mit dem Auslöserelais (213) einen elektrischen Reihen- und Parallelschwingkreis ausbildet.

19. Vorrichtung nach einem der vorhergehenden Ansprüche 5 bis 18, **dadurch gekennzeichnet, daß** die Induktivität des zweiten Stromwandlers (7) wenigstens den zweifachen Wert der Induktivität des ersten Stromwandlers (1) aufweist.

20. Vorrichtung nach einem der vorhergehenden Ansprüche 5 bis 19, **dadurch gekennzeichnet, daß** der Kern des ersten Stromwandlers (1) und der Kern des zweiten Stromwandlers (7) in einem gemeinsamen als Schutztrog ausgebildeten Gehäuse angeordnet sind.

21. Vorrichtung nach einem der vorhergehenden Ansprüche 5 bis 20, **dadurch gekennzeichnet, daß** der Wandlerkern des ersten Stromwandlers (1) aus nanokristallinem oder amorphem Werkstoff gebildet ist.

22. Vorrichtung nach einem der vorhergehenden Ansprüche, **dadurch gekennzeichnet, daß** der Wandlerkern des zweiten Stromwandlers (7) zur Erfassung wechsel- und pulsförmiger Differenzströme gemäß Typ A der Vorschrift EN 61008 ausgelegt ist.

## Claims

1. Device for detecting electrical difference currents, in particular mixed currents composed of smooth direct current and alternating currents, comprising at least two conductors for load currents to be monitored and comprising at least one magnetic current transformer, through which the conductors are passed, the conductors (L1, L2, L3, L4) being passed through at least one further magnetic current transformer (7) and the second current transformer (7) being connected in an electrically conducting manner to the first current transformer (1),
**characterized in that**
a coupling element (8) is arranged on the conduction path between the current transformers (1, 7) which effects a phase rotation of the current fed via said conduction path by 180° and which is designed as a high-pass filter.

2. The device according to Claim 1, **characterized in that** the high-pass filter (8) has a defined lower cut-off frequency f_{gu} which facilitates a tripping current profile as specified in the personnel safety limit according to IEC Report 479 (heart-valve fibrillation limit).

3. The device according to one of the preceding claims, **characterized in that** the high-pass filter is constructed from a wire with in each case at least one winding in the same direction around the first and second current transformer (1, 7).

4. The device according to Claim 3,**characterized in that** an inductance is arranged in the path of the wire, with the result that a low-pass filter with an upper cut-off frequency f_{go} is formed.

5. The device according to one of Claims 1 to 4, **characterized in that** the first current transformer (1) comprises a secondary winding (N12) and that the second current transformer (7) comprises a secondary winding (N22), which is electrically connected in series with the first secondary winding (N12) for counter-coupling high-frequency difference current components onto the first current transformer (1), wherein the first current transformer (1) with a secondary winding (N13) and a circuit (22) coupled to an analysis device (216) are components of a modulating oscillator circuit for detecting low-frequency difference current components, and that a current-measuring resistor (210) is arranged on the conduction path (217) between current transformers (1, 7), which is coupled to the analysis device (216) for detecting high-frequency difference current components.

6. The device according to Claim 5, **characterized in that** the primary windings (N11a, N21a, N11b, N21b) of all active conductors of both current transformers (1, 7) are common windings around the cores of both current transformers (1, 7) and that the secondary winding (N22) of the second current transformer (7) and a second secondary winding (N12) of the first current transformer (1) is a common winding around both transformer cores.

7. The device according to Claim 5 or 6, **characterized in that** the oscillator circuit formed from the circuit (22) and the winding (N13) of the transformer (1) is constructed as a square-wave generator (multivibrator).

8. The device according to Claim 7, **characterized in that** at least one low-pass filter (23) for demodulation is connected downstream of the circuit (22).

9. The device according to Claim 8, **characterized in that** the low-pass filter (23) is designed as an active low-pass filter with a ripple in the pass-band region greater than 0dB and a filter order greater than 1.

10. The device according to Claim 9, **characterized in that** the current-measuring resistor (210) is connected downstream of a response delay circuit (211).

11. The device according to one of the preceding Claims 5 to 10, **characterized in that** the analysis device (216) comprises a summing amplifier (24) with a following dual path rectifier (25), wherein the summing amplifier (24) has different triggering thresholds for both the detected difference current components of the circuit (22) and of the current-measuring resistor (210).

12. The device according to Claim 11, **characterized in that** at least one comparator circuit (27) is arranged downstream of the dual path rectifier (25).

13. The device according to Claim 12, **characterized in that** at least one low-pass filter (26) is arranged in the conduction path between the dual path rectifier (25) and the comparator circuit (27).

14. The device according to Claim 12 or 13, **characterized in that** the comparator circuit (27) comprises two comparators connected in sequence, wherein a low-pass filter is assigned to the second comparator.

15. The device according to one of Claims 12 to 14, **characterized in that** the comparator circuit (27) is coupled to at least one trip relay (213).

16. The device according to Claim 15, **characterized in that** the trip relay (213) can be coupled to the secondary winding (N22) of the second current transformer (7) which is electrically connected in series to a secondary winding (N12) of the first current transformer (1), wherein the coupling is made via a switch contact (28), which has at least one low voltage detector (214) applied to it in the manner of a circuit.

17. The device according to Claim 16, **characterized in that** a passive electrical matching circuit (212) is arranged in the conduction path between the switch contact (28) and the trip relay (213),

18. The device according to Claim 17, **characterized in that** the electrical matching circuit (212), in combination with the secondary winding (N22) of the second current transformer (7) and the second secondary winding (N12) of the first current transformer (1) electrically connected thereto in series and with the trip relay (213), forms an electrical series and parallel oscillator circuit.

19. The device according to one of the preceding Claims 5 to 18, **characterized in that** the inductance of the second current transformer (7) has at least twice the value of the inductance of the first current transformer (1).

20. The device according to one of the preceding Claims 5 to 19, **characterized in that** the core of the first current transformer (1) and the core of the second current transformer (7) are arranged in a common housing in the form of a protective tray.

21. The device according to one of the preceding Claims 5 to 20, **characterized in that** the transformer core of the first current transformer (1) is formed from nanocrystalline or amorphous material.

22. The device according to any one of the preceding claims, **characterized in that** the transformer core of the second current transformer (7) is designed for detecting alternating and pulsating difference currents according to Type A of Guideline EN 61008.

## Revendications

1. Dispositif de détection de courants différentiels électriques, notamment de courants de mélange composés de courant continu lisse et de courants alternatifs, comprenant au moins deux conducteurs pour les courants de charge à surveiller et comprenant au moins un transformateur de courant magnétique, à travers lequel les conducteurs sont guidés, dans lequel
les conducteurs (L1, L2, L3, N) sont guidés à travers au moins un autre transformateur de courant magnétique (7) et le deuxième transformateur de courant (7) est connecté de manière électriquement conductrice au premier transformateur de courant (1), **caractérisé en ce que** sur le trajet de la ligne entre les transformateurs de courant (1, 7) un organe de couplage (8) provoquant une rotation de phase à environ 180° du courant guidé via le trajet de la ligne est disposé, qui est réalisé comme une filtre passe-haut.

2. Dispositif selon la revendication 1, **caractérisé en ce que** le filtre passe-haut (8) présente une fréquence limite inférieure f_{gu} définie, qui permet une courbe de fréquence de courant de déclenchement conforme à la valeur limite de protection des personnes selon le rapport IECV 479 (limite de fréquence critique de fusion dans le ventricule cardiaque).

3. Dispositif selon une des revendications précédentes, **caractérisé en ce que** le filtre passe-haut est réalisé à partir d'un fil avec respectivement au moins un enroulement dans le même sens autour du premier et du deuxième transformateur de courant (1, 7).

4. Dispositif selon la revendication 3, **caractérisé en ce que** sur le parcours du fil une inductance est disposée, de sorte qu'un filtre passe-bas avec une fréquence limite supérieure f_{go} soit réalisé.

5. Dispositif selon une des revendications 1 à 4, **caractérisé en ce que** le premier transformateur de courant (1) présente un enroulement secondaire (N12) et **en ce que** le deuxième transformateur de courant (7) présente un enroulement secondaire (N22), qui est connecté électriquement en série avec le premier enroulement secondaire (N12) à des fins de contre-réaction des fractions de courant différentiel à haute fréquence, dans lequel le premier transformateur de courant (1) avec un enroulement secondaire (N13) et un circuit (22) interconnecté avec un dispositif d'évaluation (216) sont partie intégrante d'un circuit oscillant modulant à des fins de détection des fractions de courant différentiel à basse fréquence et **en ce que** sur le trajet de la ligne (217) entre les transformateurs de courant (1, 7) un résistance de mesure du courant (210) est disposée, laquelle est interconnectée avec le dispositif d'évaluation (216) à des fins de détection des fractions de courant différentiel haute fréquence.

6. Dispositif selon la revendication 5, **caractérisé en ce que** les enroulements primaires (N11a, N12a, N11b, N21b) de tous les conducteurs actifs des deux transformateurs de courant (1, 7) sont des enroulements communs autour du noyau des deux transformateurs de courant (1, 7) et **en ce que** l'enroulement secondaire (N22) du deuxième transformateur de courant (7) et un deuxième enroulement secondaire (N12) du premier transformateur de courant (1) est un enroulement commun autour des deux noyaux de transformateur.

7. Dispositif selon la revendication 5 ou 6, **caractérisé en ce que** le circuit oscillant formé par le circuit (22) et l'enroulement (N13) du transformateur (1) est réalisé comme un générateur rectangulaire (multivibrateur).

8. Dispositif selon la revendication 7, **caractérisé en ce que** au moins un filtre passe-bas (23) est assujetti au circuit (22) à des fins de démodulation.

9. Dispositif selon la revendication 8, **caractérisé en ce que** le filtre passe-bas (23) est réalisé comme un filtre passe-bas actif avec une ondulation dans la bande passante supérieure à 0 dB et un ordre de filtrage supérieur à 1.

10. Dispositif selon la revendication 9, **caractérisé en ce que** un circuit de retardement de déclenchement (211) est assujetti à la résistance de mesure du courant (210).

11. Dispositif selon une des revendications précédentes 5 à 10, **caractérisé en ce que** le dispositif d'évaluation (216) comprend un amplificateur sommateur (24) avec un redresseur bidirectionnel (25) subséquent, dans lequel l'amplificateur sommateur (24) présente des seuils de déclenchement différents pour les deux fractions de courant différentiel détectées du circuit (22) et de la résistance de mesure du courant (210).

12. Dispositif selon la revendication 11, **caractérisé en ce que** au moins un circuit comparateur (27) est assujetti au redresseur bidirectionnel (25).

13. Dispositif selon la revendication 12, **caractérisé en ce qu** au moins un filtre passe-bas (26) est disposé dans le trajet de la ligne entre le redresseur bidirectionnel (25) et le circuit de comparateur (27).

14. Dispositif selon la revendication 12 ou 13, **caractérisé en ce que** le circuit de comparateur (27) présente deux comparateurs branchés l'un après l'autre, dans lequel un filtre passe-bas est assujetti au deuxième comparateur.

15. Dispositif selon une des revendications 12 à 14, **caractérisé en ce que** le circuit de comparateur (27) est interconnecté avec au moins un relais de déclenchement (213).

16. Dispositif selon la revendication 15, **caractérisé en ce que** le relais de déclenchement (213) peut être interconnecté avec l'enroulement secondaire (N22) du deuxième transformateur de courant (7), qui est branché électriquement en série avec un enroulement secondaire (N12) du premier transformateur de courant (1), dans lequel l'interconnexion est entreprise par l'intermédiaire d'un contact de commutation (28), qui est sollicité de manière commutative par au moins un détecteur de sous-tension (214).

17. Dispositif selon la revendication 16, **caractérisé en ce que** dans le trajet de la ligne entre le contact de commutation (28) et le relais de déclenchement (213) un circuit d'adaptation électrique passif (212) est disposé.

18. Dispositif selon la revendication 17, **caractérisé en ce que** le circuit d'adaptation électrique (212) en liaison avec l'enroulement secondaire (N22) du deuxième transformateur de courant (7) et le deuxième enroulement secondaire (N12) qui y est branché électriquement en série du premier transformateur de courant (1) et avec le relais de déclenchement (213) forme un circuit oscillant électrique en série et parallèle.

19. Dispositif selon une des revendications précédentes 5 à 18, **caractérisé en ce que** l'inductance du deuxième transformateur de courant (7) présente au moins le double de la valeur de l'inductance du premier transformateur de courant (1).

20. Dispositif selon une des revendications précédentes 5 à 19, **caractérisé en ce que** le noyau du premier transformateur de courant (1) et le noyau du deuxième transformateur de courant (7) sont disposés dans un logement commun réalisé comme un bac de protection.

21. Dispositif selon une des revendications précédentes 5 à 20, **caractérisé en ce que** le noyau de transformateur du premier transformateur de courant (1) est formé d'un matériau amorphe ou nanocristallin.

22. Dispositif selon une des revendications précédentes, **caractérisé en ce que** le noyau de transformateur du deuxième transformateur de courant (7) est conçu pour la détection de courants différentiels alternatifs et impulsionnels.
